(19) Europäisches Patentamt / European Patent Office / Office européen des brevets

(11) **EP 2 659 747 B1**

(12) **EUROPÄISCHE PATENTSCHRIFT**

(45) Veröffentlichungstag und Bekanntmachung des Hinweises auf die Patenterteilung:
**01.04.2015 Patentblatt 2015/14**

(21) Anmeldenummer: **12725657.6**

(22) Anmeldetag: **21.05.2012**

(51) Int Cl.:
**H05B 41/04** *(2006.01)*   **H05B 41/282** *(2006.01)*
**H05B 41/288** *(2006.01)*

(86) Internationale Anmeldenummer:
**PCT/EP2012/059325**

(87) Internationale Veröffentlichungsnummer:
**WO 2012/160010 (29.11.2012 Gazette 2012/48)**

(54) **SCHALTUNGSANORDNUNG UND VERFAHREN ZUM BETREIBEN MINDESTENS EINER HOCHDRUCKENTLADUNGSLAMPE**

CIRCUIT ARRANGEMENT AND METHOD FOR OPERATING AT LEAST ONE HIGH-PRESSURE DISCHARGE LAMP

CIRCUIT ET PROCÉDÉ PERMETTANT DE FAIRE FONCTIONNER AU MOINS UNE LAMPE À DÉCHARGE HAUTE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2011 DE 102011076333**

(43) Veröffentlichungstag der Anmeldung:
**06.11.2013 Patentblatt 2013/45**

(73) Patentinhaber: **OSRAM GmbH**
**80807 München (DE)**

(72) Erfinder: **BOENIGK, Michael**
**12437 Berlin (DE)**

(56) Entgegenhaltungen:
**DE-A1-102004 020 499    US-A- 5 266 869**

## Beschreibung

### Technisches Gebiet

Die vorliegende Erfindung betrifft eine Schaltungsanordnung zum Betreiben mindestens einer Hochdruckentladungslampe mit einem Spannungswandler mit mindestens einem elektronischen Schalter, einer Ansteuerschaltung zum Ansteuern des mindestens einen elektronischen Schalters des Spannungswandlers mit einer vorgebbaren Wandlerfrequenz, einem ersten und einem zweiten Anschluss zum Koppeln mit der mindestens einen Hochdruckentladungslampe, einem ersten Kondensator, der zwischen den Spannungswandler und den ersten Anschluss für die Entladungslampe gekoppelt ist, und einer Ladevorrichtung, die mit dem ersten Kondensator gekoppelt ist, um diesen mit einer Gleichspannung auf eine Zündspannung zum Zünden der Hochdruckentladungslampe aufzuladen. Sie betrifft überdies ein entsprechendes Verfahren zum Betreiben einer Hochdruckentladungslampe.

### Stand der Technik

Hochdruckentladungslampen weisen beim Betrieb in bestimmten Frequenzbereichen Bogenresonanzen, so genannte akustische Resonanzen, auf. Diese Resonanzfrequenzen liegen meist in einem Bereich zwischen 1 kHz bis 1 MHz. Daher werden diese Lampen üblicherweise mit einer Rechteckfrequenz unterhalb 1 kHz betrieben. Elektronische Vorschaltgeräte, die ausgelegt sind, eine derartige Rechteckfrequenz bereitzustellen, sind jedoch technisch sehr aufwändig und daher entsprechend voluminös und kostenintensiv.

Vorteile bringt der Betrieb im Bereich um und oberhalb 1 MHz. Dabei besteht aber das Problem, dass die beim Rechteckbetrieb angewandte Impuls-Überlagerungszündung durch die hohe Induktivität des Impulstransformators beim HF-Betrieb nicht einsetzbar ist. Ein derartiger Impulstransformator wirkt nämlich als Filter für die hohen Frequenzen und begrenzt dadurch die Übertragung des Stroms in diesen Frequenzbereichen. Bei derartig hohen Frequenzen wird quasi kein Stromfluss durch einen derartigen Impulstransformator mehr ermöglicht. Es muss also nach anderen Zündungs-Alternativen gesucht werden.

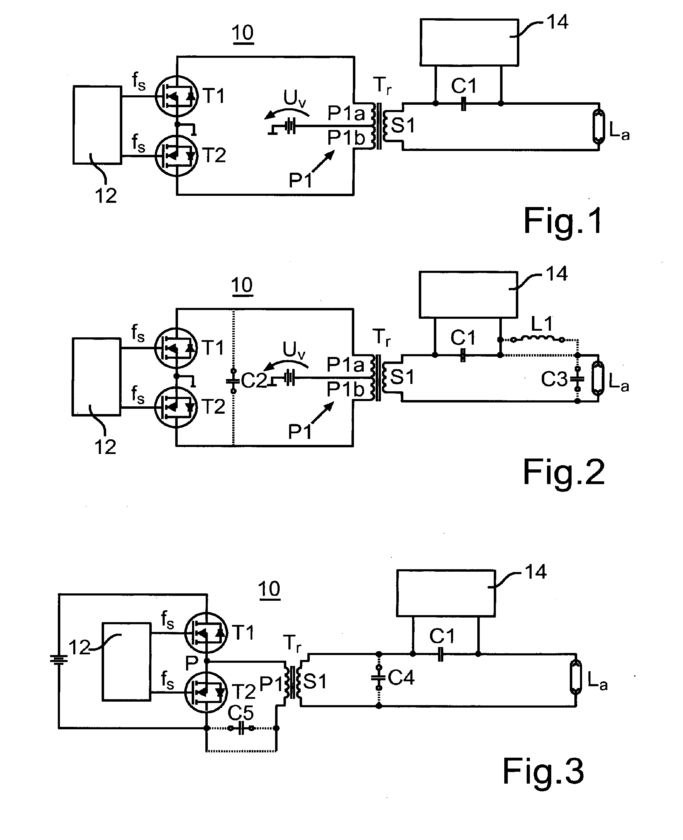

Aus der DE 199 09 530 A1 ist in diesem Zusammenhang eine Schaltungsanordnung bekannt, welche eine Gleichstromzündung einer Hochdruckentladungslampe ermöglicht. Dabei wird eine Zünd- beziehungsweise Koppelkapazität, die dort mit C1 bezeichnet ist, auf die Zündspannung, die beispielsweise zwischen 10 und 15 kV betragen kann, aufgeladen. Für den Stationärbetrieb der Hochdruckentladungslampe muss jedoch diese Zünd- beziehungsweise Koppelkapazität einen sehr hohen Kapazitätswert aufweisen, um den entsprechenden Strom für die geforderte Lampenleistung zu übertragen. In Verbindung mit der hohen Spannungsfestigkeit für den Zündvorgang ergeben sich daraus sehr voluminöse und teure Kondensatoren. Im Zündvorgang stellt dieser Kondensator nämlich die Zündkapazität dar, die auf die entsprechende Zündspannung aufgeladen wird, während im Stationärbetrieb der Lampe dieser Kondensator zwangsweise - als Koppelkapazität arbeitet. Das bedeutet, dieser Kondensator muss den Stromkreis zwischen dem Übertrager des Spannungswandlers und der Lampe schließen und somit den gesamten Lampenstrom übernehmen und weiterleiten. Durch die Induktivität L1 und den Kondensator C3, siehe dort Fig. 2, wird lediglich die Übernahmespannung bereitgestellt, die nur einige kV beträgt und damit deutlich unter der Zündspannung liegt.

Wandler für elektronische Vorschaltgeräte für den Hochfrequenzbetrieb werden im Allgemeinen im Resonanzmode betrieben. Hierbei schalten die Transistoren zur Verlustleistungsreduzierung im strom- beziehungsweise spannungslosen Zustand, das heißt im Nulldurchgang. Dafür ist auf der Primärseite des Wandlers ein zusätzlicher Resonanzkondensator notwendig, welcher mit der Primärinduktivität einen Resonanzkreis bildet. Im Resonanzfall sind die Spannungen beziehungsweise Ströme sinusförmig, so dass im Nulldurchgang geschaltet werden kann. In diesem Zusammenhang wird verwiesen auf die WO 98/18297 A1, bei der der Resonanzkondensator mit C2 bezeichnet ist. Die Primärinduktivität wird gebildet von den Wicklungen W1a und W1b des Push-Pull-Konverters, der seinerseits die Transistoren T1, T2 und den Transformator Tr1 umfasst.

### Darstellung der Erfindung

Die Aufgabe der vorliegenden Erfindung besteht deshalb darin, eine eingangs genannte Schaltungsanordnung beziehungsweise ein eingangs genanntes Verfahren derart weiterzubilden, dass die Kapazität des ersten Kondensators, der den Koppel- beziehungsweise Zündkondensator darstellt, verringert werden kann.

Diese Aufgabe wird gelöst durch eine Schaltungsanordnung mit den Merkmalen von Patentanspruch 1 sowie durch ein Verfahren mit den Merkmalen von Patentanspruch 15.

Der vorliegenden Erfindung liegt die Erkenntnis zugrunde, dass dies grundsätzlich ermöglicht wird, wenn der Spannungswandler einen Transformator umfasst, wobei der Transformator eine Primärinduktivität mit mindestens einem ersten und einem zweiten Anschluss und eine Sekundärinduktivität mit einem ersten und einem zweiten Anschluss umfasst, wobei der erste Kondensator zwischen den ersten Anschluss der Sekundärinduktivität und den ersten Anschluss für die mindestens eine Hochdruckentladungslampe gekoppelt ist. Erfindungsgemäß ist die Wandlerfrequenz im Stationärbetrieb der Schaltungsanordnung derart gewählt, dass die Sekundärseite, die zumindest die Serienschaltung aus Sekundärinduktivität, ersten Kondensator sowie Hochdruckentladungslampe umfasst, im Wesentlichen in Resonanz betrieben wird. Dadurch, dass die Induktivitäten und Kapazitäten des Serienkreises mit der Hochdruckentladungslampe einen Reihenresonanzkreis bilden, bei dem im Resonanzfall die Impedanzen der Bauelemente sehr kleine Werte annehmen, ist auch die Impedanz des Zünd- beziehungsweise Koppelkondensators, das heißt des ersten Kondensators, bei Betrieb mit einer derartigen Wandlerfrequenz sehr klein. Hierdurch kann bei relativ niedrigen Frequenzen und geringen Kapazitäten - im Vergleich ohne Resonanz - ein hoher Strom geleitet werden. Dieser ist zudem auch noch sinusförmig. Dadurch lässt sich die Kapazität des ersten Kondensators gegenüber der bekannten Vorgehensweise deutlich verringern. Damit geht eine Kostenreduktion des ersten Kondensators sowie eine Volumenverkleinerung der Schaltungsanordnung, das heißt des elektronischen Vorschaltgeräts, einher. Überdies können die Bauteile des Spannungswandlers ebenfalls kleiner dimensioniert werden, was zu einer weitern Kostenreduktion führt.

Die Erfindung ist nicht zu verwechseln mit der zur Lampe parallel geschalteten Resonanzkapazität C1 der WO 98/18297 A1 beziehungsweise des Kondensators C2 der DE 199 09 530 A1, welche eine weit oberhalb der Stationärfrequenz des Spannungswandlers liegende weitere Resonanzstelle zur Spannungsüberhöhung für die Übernahme der Hochdruckentladungslampe bereitstellen und im stationären Lampenbetrieb wirkungslos sind, da sie von der Hochdruckentladungslampe kurzgeschlossen werden. Deren Kapazitätswert ist sehr viel kleiner als die Zünd- beziehungsweise Koppelkapazität.

Weiterhin stellt die vorliegende Erfindung den Vorteil bereit, dass der Resonanzkondensator der Primärseite wie in der WO 98/18297 A1 noch vorhanden, entfallen kann, da der Primärstrom nun ebenfalls zwangsweise sinusförmig ist. Somit kann der Schaltungsaufwand nochmals deutlich reduziert werden, was zu einer weiteren Kostenreduktion führt.

Bevorzugt liegt die Wandlerfrequenz in einem Bereich von +/- 10 % der Resonanzfrequenz des Sekundärkreises. Durch die Wahl der Frequenz innerhalb dieses Bereichs lässt sich bereits eine deutliche Reduktion der Kapazität des ersten Kondensators erreichen. Der Strom beziehungsweise Spannungsverlauf ist bereits dann für ein verlustarmes Schalten ausreichend sinusförmig.

Der Spannungswandler kann einen Push-Pull-Konverter darstellen, der mindestens einen ersten und einen zweiten elektronischen Schalter umfasst, die in Serie gekoppelt sind, wobei ein erster Anschluss der Primärinduktivität mit dem ersten elektronischen Schalter, ein zweiter Anschluss der Primärinduktivität mit dem zweiten elektronischen Schalter und ein dritter Anschluss der Primärinduktivität mit einem Bezugspotential gekoppelt ist. Bevorzugt ist der Primärinduktivität ein zweiter Kondensator parallel geschaltet, um den Spannungsanstieg zu begrenzen und weitere Resonanzstellen zu erhalten.

Gemäß einer bevorzugten Ausführungsform ist zwischen den ersten und den zweiten Anschluss für die Hochdruckentladungslampe ein dritter Kondensator gekoppelt. Dieser dient dazu, eine Resonanz bei höheren Frequenzen zum Erzeugen der Übernahmespannung bereitzustellen, wobei die Resonanzfrequenz bestimmt ist durch die Streuinduktivität des Transformators auf der Sekundärseite und den dritten Kondensator. Im Betrieb ist dieser dritte Kondensator wirkungslos, da er von der Lampe, die im Betrieb niederohmig wird, kurzgeschlossen wird.

Besonders bevorzugt ist zwischen den ersten Kondensator und den ersten Anschluss für die Hochdruckentladungslampe eine erste Induktivität gekoppelt. Diese dient der Stromformung sowie der Strombegrenzung. Sie kann in Verbindung mit dem dritten Kondensator weiterhin der Einrichtung weiterer Resonanzstellen zum Zwecke der Übernahmespannungserzeugung und der Verschiebung der Resonanzstelle in Verbindung mit dem ersten Kondensator dienen. Unter Umständen ist es auch sinnvoll, die erste Induktivität zwischen den ersten Kondensator und den ersten Anschluss der Sekundärseite des Transformators zu koppeln. Der dritte Kondensator wird dann zwischen den Knotenpunkt des ersten Kondensators und der ersten Induktivität sowie den zweiten Anschluss der Hochdruckentladungslampe gekoppelt. Hierbei blockt der zweite Kondensator einen Teil des Entladestroms des ersten Kondensators (bei Übernahme der Hochdruckentladungslampe) von der Sekundärseite des Transformators ab. Dies verringert die Rückschlagspannung im Primärkreis des Transformators und somit die Spannungsbelastung des ersten und des zweiten elektronischen Schalters im Zündmoment der Hockdruckentladungslampe.

Der Spannungswandler kann auch einen Brückenkonverter darstellen, der mindestens einen ersten und einen zweiten elektronischen Schalter umfasst. Dabei kann der erste Anschluss der Primärinduktivität mit einem Verbindungspunkt zwischen dem ersten und dem zweiten elektronischen Schalter gekoppelt sein, wobei der zweite Anschluss der Primärinduktivität mit dem vom Verbindungspunkt abgekehrten Anschluss des zweiten elektronischen Schalters gekoppelt ist. In diesem Zusammenhang kann parallel zur Sekundärinduktivität ein vierter Kondensator gekoppelt sein. Dieser dient wiederum der Erzeugung der Übernahmespannung für die Hochdruckentladungslampe zusammen mit der Sekundärinduktivität des Transformators des Spannungswandlers.

Weiterhin oder alternativ kann zwischen den vom Verbindungspunkt abgekehrten Anschluss des zweiten elektronischen Schalters und den zweiten Anschluss der Primärinduktivität ein fünfter Kondensator gekoppelt sein. Dieser dient bei ungünstiger Kapazitätsgröße des ersten Kondensators als Symmetriekondensator für den Transformator und ermöglicht eine Verschiebung der Resonanzfrequenz des Gesamtsystems, da sich die Kapazitäten des ersten und des fünften Kondensators über das Quadrat des Übersetzungsverhältnisses des Transformators addieren.

Der Spannungswandler kann auch einen Einschalterwandler mit einem elektronischen Schalter, insbesondere einen Flyback Konverter, darstellen. Bevorzugt ist dabei dem elektronischen Schalter ein sechster Kondensator parallel geschaltet. Dieser dient der Begrenzung des Spannungsanstiegs über den ersten elektronischen Schalter und beeinflusst ebenfalls die Resonanzfrequenz des Sekundärkreises. Auch die Einbeziehung der aus den weiter oben beschriebenen Schaltungsausführungen bereits bekannten zusätzlichen Induktivität im Sekundärkreis ist wiederum möglich.

Weiterhin kann der Sekundärinduktivität ein siebter Kondensator parallel geschaltet sein, der wiederum der Bereitstellung der Übernahmefrequenz dient.

Die Wandlerfrequenz beträgt bei den bevorzugten Ausführungsbeispielen der vorliegenden Erfindung mindestens 1 MHz.

Weitere vorteilhafte Ausführungsformen ergeben sich aus den Unteransprüchen.

Die mit Bezug auf eine erfindungsgemäße Schaltungsanordnung vorgestellten bevorzugten Ausführungsformen und deren Vorteile gelten, soweit anwendbar, entsprechend für das erfindungsgemäße Verfahren.**Kurze Beschreibung der Zeichnung(en)**

Im Nachfolgenden werden Ausführungsbeispiele der vorliegenden Erfindung unter Bezugnahme auf die beigefügten Zeichnungen näher beschrieben. Es zeigen:

Fig. 1    in schematischer Darstellung ein erstes Ausführungsbeispiel einer erfindungsgemäßen Schaltungsanordnung;

Fig. 2    in schematischer Darstellung ein zweites Ausführungsbeispiel einer erfindungsgemäßen Schaltungsanordnung;

Fig. 3    in schematischer Darstellung ein drittes Ausführungsbeispiel einer erfindungsgemäßen Schaltungsanordnung; und

Fig. 4    in schematischer Darstellung ein viertes Ausführungsbeispiel einer erfindungsgemäßen Schaltungsanordnung.

In den nachfolgenden Ausführungsbeispielen werden gleiche und gleich wirkende Bauelemente mit denselben Bezugszeichen gekennzeichnet.

Fig. 1 zeigt in schematischer Darstellung ein erstes Ausführungsbeispiel einer erfindungsgemäßen Schaltungsanordnung zum Betreiben einer Hochdruckentladungslampe La. In diesem Ausführungsbeispiel ist ein Spannungswandler 10 durch einen Push-Pull-Konverter realisiert, der einen ersten elektronischen Schalter T1 sowie einen zweiten elektronischen Schalter T2 umfasst, die in Serie gekoppelt sind. Der Spannungswandler 10 umfasst weiterhin einen Transformator Tr mit einer Primärinduktivität P1, die eine erste Teilinduktivität P1a und eine zweite Teilinduktivität P1b umfasst. Eine Sekundärinduktivität ist mit S1 bezeichnet. Ein erster Anschluss der Primärinduktivität P1 ist mit dem ersten elektronischen Schalter T1 gekoppelt, während ein zweiter Anschluss der Primärinduktivität P1 mit dem zweiten elektronischen Schalter T2 gekoppelt ist. Ein dritter Anschluss, der zwischen der ersten Teilinduktivität P1a und der zweiten Teilinduktivität P1b angeordnet ist, ist mit einem Bezugspotential gekoppelt, das insbesondere eine Gleichspannung $U_V$ darstellt.

Der erste und der zweite elektronische Schalter T1, T2 werden von einer Ansteuerungsvorrichtung 12 mit einem Ansteuersignal angesteuert, das eine Schaltfrequenz $f_s$ aufweist. Sekundärseitig ist ein erster Kondensator C1 vorgesehen, der zwischen die Sekundärinduktivität S1 sowie einen ersten Anschluss der Hochdruckentladungslampe La gekoppelt ist. Eine mit dem ersten Kondensator C1 gekoppelte Ladevorrichtung 14 dient dazu, den ersten Kondensator C1 mit einer Gleichspannung auf eine Zündspannung zum Zünden der Hochdruckentladungslampe La aufzuladen.

Im Hinblick auf die vorliegende Erfindung ist folgendes anzumerken: Induktivitäten und Kapazitäten besitzen ganz allgemein einen frequenzabhängigen Blindwiderstand. Damit wird der Scheinwiderstand Z einer Reihenschaltung aus einem ohmschen Widerstand R, einer Induktivität L und eines Kondensators C ebenfalls frequenzabhängig.

Im Nachfolgenden stellt R den ohmschen Widerstand der Hochdruckentladungslampe La dar, der üblicherweise zwischen 10 und 200 Ω liegt stellt, Ls die Gesamtinduktivität des Sekundärkreises bestehend aus allen direkten und indirekten Induktivitäten, und Cs die Gesamtkapazität des Sekundärkreises bestehend aus allen direkten und indirekten Kapazitäten:

$$|Z| = \sqrt{R^2 + \left(\omega Ls - \frac{1}{\omega Cs}\right)^2}$$

Eine direkte Induktivität stellt beispielsweise die zusätzliche Induktivität L1 dar, während indirekte Induktivitäten beispielsweise durch Streu-, parasitäre oder rückwirkende Induktivitäten gebildet werden.

Eine direkte Kapazität ist beispielsweise die Zünd- beziehungsweise Koppelkapazität C1, während indirekte Kapazitäten beispielsweise durch Streu-, parasitäre oder rückwirkende Kapazitäten gebildet werden. Die bestimmende Kapazität in Cs ist C1.

Erfindungsgemäß wird nunmehr die Schaltfrequenz $f_s$ so gewählt, dass die Gesamtinduktivität Ls und die Gesamtkapazität Cs in Serienresonanz betrieben werden. Um dies zu erreichen, ist die Schaltfrequenz $f_s$ wie folgt zu wählen:

$$f_s = \frac{1}{2\pi\sqrt{Ls * Cs}}$$

Für die Erfindung brauchbare Werte ergeben sich jedoch bereits bei einer Wahl der Schaltfrequenz $f_s$ im Bereich von +/- 10 % der oben angegebenen Resonanzfrequenz $f_s$ des Sekundärkreises.

Ohne Reihenresonanz wäre die Impedanz des Kondensators C1:

$$|Zc| = 1/\omega C1$$

Es wäre also eine weitaus höhere Frequenz beziehungsweise ein größerer Kondensator notwendig, um einen entsprechenden Strom $I = U/|Z|$ fließen zu lassen.

Fig. 2 zeigt ein zweites Ausführungsbeispiel einer erfindungsgemäßen Schaltungsanordnung, bei dem der Primärinduktivität P1 ein Kondensator C2 parallel geschaltet ist. Dieser Kondensator C2 dient einer Begrenzung des Spannungsanstiegs im Primärkreis sowie der Bereitstellung weiterer Resonanzstellen.

Weiterhin ist bei dem in Fig. 2 dargestellten Ausführungsbeispiel der Hochdruckentladungslampe La ein Kondensator C3 parallel geschaltet. Dieser hat die Aufgabe, eine weitere Resonanzstelle zur Erzeugung der Übernahmespannung bereitzustellen.

Eine zwischen den Kondensator C1 und den ersten Anschluss für die Hochdruckentladungslampe La gekoppelte Induktivität L1 dient der Stromformung sowie der Strombegrenzung. Sie kann in Verbindung mit dem Kondensator C3 weiterhin der Einrichtung weiterer Resonanzstellen zum Zwecke der Übernahmespannungserzeugung und der Verschiebung der Resonanzstelle in Verbindung mit dem Kondensator C1 dienen. Unter Umständen ist es auch sinnvoll, die Induktivität L1 zwischen den Kondensator C1 und den ersten Anschluss der Sekundärseite des Transformators Tr zu koppeln. Der Kondensator C3 wird dann zwischen den Knotenpunkt des Kondensators C1 und der Induktivität L1 sowie den zweiten Anschluss der Hochdruckentladungslampe La gekoppelt. Hierbei blockt der Kondensator C2 einen Teil des Entladestroms des Kondensators C1 (bei Übernahme der Hochdruckentladungslampe) von der Sekundärseite des Transformators Tr ab. Dies verringert die Rückschlagspannung im Primärkreis des Transformators Tr und somit die Spannungsbelastung der Schalter T1 und T2 im Zündmoment der Hockdruckentladungslampe.

Bei dem in Fig. 3 dargestellten Ausführungsbeispiel stellt der Spannungswandler 10 einen Brückenkonverter, insbesondere einen Halbbrückenkonverter, dar, wobei der erste Anschluss der Primärinduktivität P1 mit einem Verbindungspunkt zwischen dem ersten T1 und dem zweiten elektronischen Schalter T2 gekoppelt ist. Der zweite Anschluss der Primärinduktivität P1 ist mit dem vom Verbindungspunkt P abgekehrten Anschluss des zweiten elektronischen Schalters T2 gekoppelt. Parallel zur Sekundärinduktivität ist ein Kondensator C4 gekoppelt, der ebenso wie der in Fig. 2 dargestellte Kondensator C3 der Spannungsüberhöhung des für die Zündung förderlichen Wechselspannungsanteils beziehungsweise für die Erhöhung der Übernahmespannung dient.

Zwischen den vom Verbindungspunkt P abgekehrten Anschluss des zweiten elektronischen Schalters T2 und den zweiten Anschluss der Primärinduktivität ist ein Kondensator C5 gekoppelt. Dieser dient als Koppelkondensator.

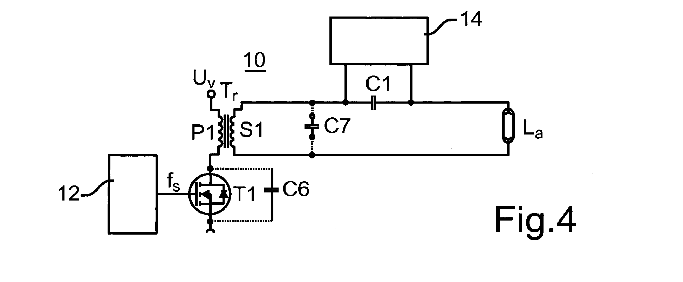

Fig. 4 zeigt ein Ausführungsbeispiel mit einem Einschaltwandler als Spannungswandler, wobei vorliegend ein Flyback Konverter gewählt wurde. Dabei ist dem elektronischen Schalter T1 ein Kondensator C6 parallel geschaltet. Dieser dient der Begrenzung des Spannungsanstiegs über dem Schalter T1 und beeinflusst ebenfalls die Resonanzfrequenz des Sekundärkreises. Weiterhin kann der Sekundärinduktivität S1 ein Kondensator C7 parallel geschaltet sein, der dieselbe Funktion übernimmt wie der Kondensator C4 bei dem in Fig. 3 dargestellten Ausführungsbeispiel.

Bei einem bevorzugten Ausführungsbeispiel gemäß Fig. 1 beträgt die Kapazität des Kondensators C1 1,5 nF. Dies stellt etwa ein Fünftel der für den nicht resonanten Betrieb des Sekundärkreises benötigten Kapazität C1 dar. Die Schaltfrequenz liegt bei 1,2 MHz. Für die Zündung der Lampe wird der Kondensator C1 gleichspannungsmäßig auf ca. 10 kV aufgeladen, das heißt die Open Circuit Spannung des Transformators Tr wird gleichspannungsmäßig bis zum Zünden der Lampe angehoben. Danach arbeitet der Kondensator C1 als Reihenresonanzkondensator für den Sekundärkreis. Durch den Resonanzbetrieb ergibt sich eine Kondensatorkapazität, welche bei der benötigten Spannungsfestigkeit einem handelsüblichen Bauelement entspricht und geometrisch ohne Schwierigkeiten selbst in kleinsten zur Verfügung stehenden Bauräumen, beispielsweise in den Sockel einer D3-Lampe, passt.

Durch den resonanten Betrieb schalten die Transistoren stromlos, auch ohne den sonst üblichen Resonanzkondensator im Primärkreis. Der Lampenstrom I ist sinusähnlich.

**Patentansprüche**

1. Schaltungsanordnung zum Betreiben mindestens einer Hochdruckentladungslampe (La) mit

   - einem Spannungswandler (10) mit mindestens einem elektronischen Schalter (T1; T2);
   - einer Ansteuerschaltung (12) zum Ansteuern des mindestens einen elektronischen Schalters (T1; T2) des Spannungswandlers (10) mit einer vorgebbaren Wandlerfrequenz ($f_s$);
   - einem ersten und einem zweiten Anschluss zum Koppeln mit der mindestens einen Hochdruckentladungslampe (La);

- einem ersten Kondensator (C1), der zwischen den Spannungswandler (10) und den ersten Anschluss für die Entladungslampe gekoppelt ist; und

- einer Ladevorrichtung (14), die mit dem ersten Kondensator (C1) gekoppelt ist, um diesen mit einer Gleichspannung auf eine Zündspannung zum Zünden der Hochdruckentladungslampe (La) aufzuladen;

wobei der Spannungswandler (10) einen Transformator (Tr) umfasst, wobei der Transformator (Tr) eine Primärinduktivität (P1; P1a, P1b) mit mindestens einem ersten und einem zweiten Anschluss und eine Sekundärinduktivität (S1) mit einem ersten und einem zweiten Anschluss umfasst,

wobei der erste Kondensator (C1) zwischen den ersten Anschluss der Sekundärinduktivität (S1) und den ersten Anschluss für die mindestens eine Hochdruckentladungslampe (La) gekoppelt ist

**dadurch gekennzeichnet**,

dass die Wandlerfrequenz ($f_s$) im Stationärbetrieb der Schaltungsanordnung derart gewählt ist, dass die Sekundärseite, die zumindest die Serienschaltung aus Sekundärinduktivität (S1), erstem Kondensator (C1) sowie Hochdruckentladungslampe (La) umfasst, im Wesentlichen in Resonanz betrieben wird.

2. Schaltungsanordnung nach Anspruch 1,
**dadurch gekennzeichnet**,
dass die Wandlerfrequenz ($f_s$) in einem Bereich von +/-10% der Resonanzfrequenz des Sekundärkreises liegt.

3. Schaltungsanordnung nach einem der Ansprüche 1 oder 2,
**dadurch gekennzeichnet**,
dass der Spannungswandler (10) einen Push-Pull-Konverter darstellt, der mindestens einen ersten (T1) und einen zweiten elektronischen Schalter (T2) umfasst, die in Serie gekoppelt sind, wobei ein erster Anschluss der Primärinduktivität (P1; P1a, P1b) mit dem ersten elektronischen Schalter (T1), ein zweiter Anschluss der Primärinduktivität (P1; P1a, P1b) mit dem zweiten elektronischen Schalter (T2) und ein dritter Anschluss der Primärinduktivität (P1; P1a, P1b) mit einem Bezugspotential ($U_V$) gekoppelt ist.

4. Schaltungsanordnung nach Anspruch 3,
**dadurch gekennzeichnet**,
dass der Primärinduktivität (P1; P1a, P1b) ein zweiter Kondensator (C2) parallel geschaltet ist.

5. Schaltungsanordnung nach einem der Ansprüche 3 oder 4,
**dadurch gekennzeichnet**,
dass zwischen den ersten und den zweiten Anschluss für die Hochdruckentladungslampe (La) ein dritter Kondensator (C3) gekoppelt ist.

6. Schaltungsanordnung nach einem der Ansprüche 3 bis 5,
**dadurch gekennzeichnet**,
dass zwischen den ersten Kondensator (C1) und den ersten Anschluss für die Hochdruckentladungslampe (La) eine erste Induktivität (L1) gekoppelt ist.

7. Schaltungsanordnung nach einem der Ansprüche 1 bis 3,
**dadurch gekennzeichnet**,
dass der Spannungswandler (10) einen Brückenkonverter darstellt, der mindestens einen ersten (T1) und einen zweiten elektronischen Schalter (T2) umfasst.

8. Schaltungsanordnung nach Anspruch 7,
**dadurch gekennzeichnet**,
dass der erste Anschluss der Primärinduktivität (P1; P1a, P1b) mit einem Verbindungspunkt (P) zwischen dem ersten (T1) und dem zweiten elektronischen Schalter (T2) gekoppelt ist, wobei der zweite Anschluss der Primärinduktivität (P1; P1a, P1b) mit dem vom Verbindungspunkt (P) abgekehrten Anschluss des zweiten elektronischen Schalters (T2) gekoppelt ist.

9. Schaltungsanordnung nach einem der Ansprüche 7 oder 8,
**dadurch gekennzeichnet**,
dass parallel zur Sekundärinduktivität (S1) ein vierter Kondensator (C4) gekoppelt ist.

10. Schaltungsanordnung nach einem der Ansprüche 7 bis 9,
**dadurch gekennzeichnet**,
dass zwischen den vom Verbindungspunkt (P) abgekehrten Anschluss des zweiten elektronischen Schalters (T2) und den zweiten Anschluss der Primärinduktivität (P1; P1a, P1b) ein fünfter Kondensator (C5) gekoppelt ist.

11. Schaltungsanordnung nach einem der vorhergehenden Ansprüche,
**dadurch gekennzeichnet**,
dass der Spannungswandler (10) einen Einschalterwandler mit einem elektronischen Schalter (T1), insbesondere einen Flyback Konverter, darstellt.

12. Schaltungsanordnung nach Anspruch 11,
**dadurch gekennzeichnet**,
dass dem elektronischen Schalter (T1) ein sechster Kondensator (C6) parallel geschaltet ist.

**13.** Schaltungsanordnung nach einem der Ansprüche 11 oder 12,
**dadurch gekennzeichnet**,
dass der Sekundärinduktivität (S1) ein siebter Kondensator (C7) parallel geschaltet ist.

**14.** Schaltungsanordnung nach einem der vorhergehenden Ansprüche,
**dadurch gekennzeichnet**,
dass die Wandlerfrequenz (f$_s$) mindestens 1 MHz beträgt.

**15.** Verfahren zum Betreiben mindestens einer Hochdruckentladungslampe (La) an einer Schaltungsanordnung mit einem Spannungswandler (10) mit mindestens einem elektronischen Schalter (T1; T2); einer Ansteuerschaltung (12) zum Ansteuern des mindestens einen elektronischen Schalters (T1; T2) des Spannungswandlers (10) mit einer vorgebbaren Wandlerfrequenz (f$_s$); einem ersten und einem zweiten Anschluss zum Koppeln mit der mindestens einen Hochdruckentladungslampe (La); einem ersten Kondensator (C1), der zwischen den Spannungswandler (10) und den ersten Anschluss für die Entladungslampe gekoppelt ist; und einer Ladevorrichtung (14), die mit dem ersten Kondensator (C1) gekoppelt ist, um diesen mit einer Gleichspannung auf eine Zündspannung zum Zünden der Hochdruckentladungslampe (La) aufzuladen; gekennzeichnet durch folgende Schritte:

a) Bereitstellen eines Transformators (Tr) mit einer Primärinduktivität (P1; P1a, P1b), die mindestens einen ersten und einen zweiten Anschluss umfasst, und einer Sekundärinduktivität (S1), die einen ersten und einen zweiten Anschluss umfasst;
b) Koppeln des ersten Kondensators (C1) zwischen den ersten Anschluss der Sekundärinduktivität (S1) und den ersten Anschluss für die mindestens eine Hochdruckentladungslampe (La); und
c) Ansteuern des mindestens einen elektronischen Schalters (T1; T2) des Spannungswandlers (10) im Stationärbetrieb der Schaltungsanordnung mit einer Wandlerfrequenz (f$_s$), dass die Sekundärseite, die zumindest die Serienschaltung aus Sekundärinduktivität (S1), erstem Kondensator (C1) sowie Hochdruckentladungslampe (La) umfasst, im Wesentlichen in Resonanz betrieben wird.

**Claims**

**1.** Circuit arrangement for operating at least one high-pressure discharge lamp (La) comprising

- a voltage converter (10) comprising at least one electronic switch (T1; T2);
- an actuation circuit (12) for actuating the at least one electronic switch (T1; T2) of the voltage converter (10) at a presettable converter frequency (f$_s$);
- a first and a second connection for coupling to the at least one high-pressure discharge lamp (La);
- a first capacitor (C1) which is coupled between the voltage converter (10) and the first connection for the discharge lamp; and
- a charging apparatus (14), which is coupled to the first capacitor (C1) in order to charge said capacitor with a DC voltage to a starting voltage for starting the high-pressure discharge lamp (La);
wherein the voltage converter (10) comprises a transformer (Tr), wherein the transformer (Tr) comprises a primary inductance (P1; P1a, P1b) having at least one first and one second connection and a secondary inductance (S1) having a first and a second connection,
wherein the first capacitor (C1) is coupled between the first connection of the secondary inductance (S1) and the first connection for the at least one high-pressure discharge lamp (La),
**characterized**
in that the converter frequency (f$_s$) is selected during steady-state operation of the circuit arrangement in such a way that the secondary side, which at least comprises the series circuit comprising the secondary inductance (S1), the first capacitor (C1) and the high-pressure discharge lamp (La), is operated substantially at resonance.

**2.** Circuit arrangement according to Claim 1,
**characterized**
in that the converter frequency (f$_s$) is in a range of +/- 10% of the resonant frequency of the secondary circuit.

**3.** Circuit arrangement according to either of Claims 1 and 2,
**characterized**
in that the voltage converter (10) is a push-pull converter, which comprises at least one first electronic switch (T1) and one second electronic switch (T2), which are coupled in series, wherein a first connection of the primary inductance (P1; P1a, P1b) is coupled to the first electronic switch (T1) a second connection of the primary inductance (P1; P1a, P1b) is coupled to the second electronic switch (T2), and a third connection of the primary inductance (P1; P1a, P1b) is coupled to a reference potential (U$_V$).

**4.** Circuit arrangement according to Claim 3,

**characterized**
in that a second capacitor (C2) is connected in parallel with the primary inductance (P1; P1a, P1b).

5. Circuit arrangement according to either of Claims 3 and 4,
**characterized**
in that a third capacitor (C3) is coupled between the first and second connections for the high-pressure discharge lamp (La).

6. Circuit arrangement according to one of Claims 3 to 5,
**characterized**
in that a first inductance (L1) is coupled between the first capacitor (C1) and the first connection for the high-pressure discharge lamp (La).

7. Circuit arrangement according to one of Claims 1 to 3,
**characterized**
in that the voltage converter (10) is a bridge converter, which comprises at least one first electronic switch (T1) and one second electronic switch (T2).

8. Circuit arrangement according to Claim 7,
**characterized**
in that the first connection of the primary inductance (P1; P1a, P1b) is coupled to a node (P) between the first electronic switch (T1) and the second electronic switch (T2), wherein the second connection of the primary inductance (P1; P1a, P1b) is coupled to that connection of the second electronic switch (T2) which is remote from the node (P).

9. Circuit arrangement according to either of Claims 7 and 8,
**characterized**
in that a fourth capacitor (C4) is coupled in parallel with the secondary inductance (S1).

10. Circuit arrangement according to one of Claims 7 to 9,
**characterized**
in that a fifth capacitor (C5) is coupled between that connection of the electronic switch (T2) which is remote from the node (P) and the second connection of the primary inductance (P1; P1a, P1b).

11. Circuit arrangement according to one of the preceding claims,
**characterized**
in that the voltage converter (10) is an on-off switch converter comprising an electronic switch (T1), in particular a flyback converter.

12. Circuit arrangement according to Claim 11,
**characterized**

in that a sixth capacitor (C6) is connected in parallel with the electronic switch (T1).

13. Circuit arrangement according to either of Claims 11 and 12,
**characterized**
in that a seventh capacitor (C7) is connected in parallel with the secondary inductance (S1).

14. Circuit arrangement according to one of the preceding claims,
**characterized**
in that the converter frequency ($f_s$) is at least 1 MHz.

15. Method for operating at least one high-pressure discharge lamp (La) using a circuit arrangement comprising a voltage converter (10) comprising at least one electronic switch (T1; T2); an actuation circuit (12) for actuating the at least one electronic switch (T1; T2) of the voltage converter (10) at a presettable converter frequency ($f_s$); a first and a second connection for coupling to the at least one high-pressure discharge lamp (La); a first capacitor (C1), which is coupled between the voltage converter (10) and the first connection for the discharge lamp; and a charging apparatus (14), which is coupled to the first capacitor (C1) in order to charge said capacitor with a DC voltage to a starting voltage for starting the high-pressure discharge lamp (La);
**characterized by** the following steps:

a) providing a transformer (Tr) having a primary inductance (P1; P1a, P1b), which comprises at least one first and one second connection, and a secondary inductance (S1), which comprises a first and a second connection;
b) coupling the first capacitor (C1) between the first connection of the secondary inductance (S1) and the first connection for the at least one high-pressure discharge lamp (La); and
c) actuating the at least one electronic switch (T1; T2) of the voltage converter (10) during steady-state operation of the circuit arrangement at a converter frequency ($f_s$) in such a way that the secondary side, which comprises at least the series circuit comprising the secondary inductance (S1), the first capacitor (C1) and the high-pressure discharge lamp (La), is operated substantially at resonance.

**Revendications**

1. Circuit permettant de faire fonctionner au moins une lampe à décharge haute pression (La), comprenant :

- un transformateur de tension (10) muni d'au moins un interrupteur électronique (T1 ; T2) ;

- un circuit de commande (12) destiné à commander le au moins un interrupteur électronique (T1 ; T2) du transformateur de tension (10) au moyen d'une fréquence de transformateur ($f_s$) définissable à l'avance ;

- une première et une deuxième borne destinées à être couplées à la au moins une lampe à décharge haute pression (La) ;

- un premier condensateur (C1) couplé entre le transformateur de tension (10) et la première borne pour la lampe à décharge ; et

- un dispositif de charge (14) couplé au premier condensateur (C1) pour recharger ce dernier au moyen d'une tension continue à une tension d'allumage permettant l'allumage de la lampe à décharge haute pression (La) ;

le transformateur de tension (10) comprenant un transformateur (Tr), ledit transformateur (Tr) comprenant une inductance primaire (P1 ; P1a, P1b) munie d'au moins une première et une deuxième borne et une inductance secondaire (S1) munie d'une première et d'une seconde borne,

le premier condensateur (C1) étant couplé entre la première borne de l'inductance secondaire (S1) et la première borne pour la au moins une lampe à décharge haute pression (La),

**caractérisé en ce que**

la fréquence de transformateur ($f_s$) en fonctionnement stationnaire du circuit est telle que le côté secondaire comprenant au moins le circuit en série de l'inductance secondaire (S1), du premier condensateur (C1) et de la lampe à décharge haute pression (La), fonctionne sensiblement en résonance.

2. Circuit selon la revendication 1,
**caractérisé en ce que**
la fréquence de transformateur ($f_s$) se situe aux alentours de +/- 10% de la fréquence de résonance du circuit secondaire.

3. Circuit selon l'une des revendications 1 ou 2,
**caractérisé en ce que**
le transformateur de tension (10) constitue un convertisseur push-pull comprenant au moins un premier interrupteur électronique (T1) et un deuxième interrupteur électronique (T2) couplés en série, une première borne de l'inductance primaire (P1 ; P1a, P1b) étant couplée au premier interrupteur électronique (T1), une deuxième borne de l'inductance primaire (P1 ; P1a, P1b) étant couplée au deuxième interrupteur électronique (T2) et une troisième borne de l'inductance primaire (P1 ; P1a, P1b) étant couplée à un potentiel de référence ($U_V$).

4. Circuit selon la revendication 3,
**caractérisé en ce que**

un deuxième condensateur (C2) est connecté en parallèle à l'inductance primaire (P1 ; P1a, P1b).

5. Circuit selon l'une des revendications 3 ou 4,
**caractérisé en ce que**
un troisième condensateur (C3) est couplé entre la première et la deuxième borne pour la lampe à décharge haute pression (La).

6. Circuit selon l'une des revendications 3 à 5,
**caractérisé en ce que**
une première inductance (L1) est couplée entre le premier condensateur (C1) et la première borne pour la lampe à décharge haute pression (La).

7. Circuit selon l'une des revendications 1 à 3,
**caractérisé en ce que**
le transformateur de tension (10) constitue un convertisseur en pont comprenant au moins un premier interrupteur électronique (T1) et un deuxième interrupteur électronique (T2).

8. Circuit selon la revendication 7,
**caractérisé en ce que**
la première borne de l'inductance primaire (P1 ; P1a, P1b) est couplée à un point de liaison (P) entre le premier interrupteur électronique (T1) et le deuxième interrupteur électronique (T2), la deuxième borne de l'inductance primaire (P1 ; P1a, P1b) étant couplée à la borne opposée au point de liaison (P) du deuxième interrupteur électronique (T2).

9. Circuit selon l'une des revendications 7 ou 8,
**caractérisé en ce que**
un quatrième condensateur (C4) est couplé en parallèle à l'inductance secondaire (S1).

10. Circuit selon l'une des revendications 7 à 9,
**caractérisé en ce que**
un cinquième condensateur (C5) est couplé entre la borne opposée au point de liaison (P) du deuxième interrupteur électronique (T2) et la deuxième borne de l'inductance primaire (P1 ; P1a, P1b).

11. Circuit selon l'une des revendications précédentes,
**caractérisé en ce que**
le transformateur de tension (10) constitue un convertisseur à interrupteur unique muni d'un interrupteur électronique (T1), en particulier un convertisseur flyback.

12. Circuit selon la revendication 11,
**caractérisé en ce que**
un sixième condensateur (C6) est connecté en parallèle à l'interrupteur électronique (T1).

13. Circuit selon l'une des revendications 11 ou 12,
**caractérisé en ce que**

un septième condensateur (C7) est connecté en parallèle à l'inductance secondaire (S1).

14. Circuit selon l'une des revendications précédentes, **caractérisé en ce que** la fréquence de transformateur ($f_s$) est d'au moins 1 MHz.

15. Procédé permettant de faire fonctionner au moins une lampe à décharge haute pression (La) sur un circuit comprenant un transformateur de tension (10) muni d'au moins un interrupteur électronique (T1 ; T2) ; un circuit de commande (12) destiné à commander le au moins un interrupteur électronique (T1 ; T2) du transformateur de tension (10) au moyen d'une fréquence de transformateur ($f_s$) définissable à l'avance ; une première et une deuxième borne destinées à être couplées à la au moins une lampe à décharge haute pression (La) ; un premier condensateur (C1) couplé entre le transformateur de tension (10) et la première borne pour la lampe à décharge ; et un dispositif de charge (14) couplé au premier condensateur (C1) pour recharger celui-ci au moyen d'une tension continue à une tension d'allumage permettant l'allumage de la lampe à décharge haute pression (La) ;
**caractérisé par** les étapes suivantes :

a) mise à disposition d'un transformateur (Tr) comprenant une inductance primaire (P1 ; P1a, P1b) munie d'au moins une première et une deuxième borne et une inductance secondaire (S1) munie d'une première et d'une seconde borne ;
b) couplage du premier condensateur (C1) entre la première borne de l'inductance secondaire (S1) et la première borne pour la au moins une lampe à décharge haute pression (La) ; et
c) commande du au moins un interrupteur électronique (T1 ; T2) du transformateur de tension (10) en fonctionnement stationnaire du circuit au moyen d'une fréquence de transformateur ($f_s$) telle que le côté secondaire comprenant au moins le circuit en série de l'inductance secondaire (S1), du premier condensateur (C1) et de la lampe à décharge haute pression (La), fonctionne sensiblement en résonance.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19909530 A1
- WO 9818297 A1